Europäisches Patentamt

European Patent Office

Office européen des brevets

(11) Publication number: **0 085 970**
**A2**

## (12) EUROPEAN PATENT APPLICATION

(21) Application number: **83101083.0**

(22) Date of filing: **04.02.83**

(51) Int. Cl.³: **G 11 B 5/55**

(30) Priority: **05.02.82 US 346290**

(43) Date of publication of application:
**17.08.83 Bulletin 83/33**

(84) Designated Contracting States:
**AT BE CH DE FR GB IT LI LU NL SE**

(71) Applicant: **Forestlane Co., Ltd.**
**14251 Franklin Avenue**
**Tustin California 92680(US)**

(72) Inventor: **Fay, Larry**
**22595 Killy Street**
**El Toro California 92630(US)**

(74) Representative: **Mehl, Ernst, Dipl.-Ing.**
**Postfach 22 01 76**
**D-8000 München 22(DE)**

(54) Positioning mechanism for a floppy disk drive read/write head carriage.

(57) A positioning mechanism for a floppy disk drive, read/write head carriage is disclosed. The positioning mechanism converts the rotary motion of a stepper motor into the linear motion of the read/write head carriage by driving a cylindrical capstan and the carriage with a flexible, non-stretchable band. The band is wound around the capstan and fixed thereto with its opposite end extending from the capstan along the line which is tangent to the capstan and parallel to the path of movement of the carriage. The opposite ends of the band are rigidly attached to the carriage. Proper tension is maintained in the band by selcting the dimensions and materials of the positioning mechanism such that the system is thermally compensated.

FIG I

EP 0 085 970 A2

## BACKGROUND OF THE INVENTION

The present invention relates to a floppy disk drive unit and, in particular, to a mechanism for shifting the magnetic read/write head carriage in a floppy disk drive unit to align the magnetic head or heads with tracks on the magnetic recording disk.

Commercially available floppy disk drives comprise a first assembly for holding and rotating a floppy disk or diskette and a separate second assembly for holding and shifting the position of at least one magnetic head with respect to the rotating floppy disk. In a conventional system, this latter assembly includes a carriage, movable radially relative to the floppy disk such that the magnetic head(s) are positioned accurately with respect to tracks on the disk.

The U.S. Patent No. 4,139,877 to Townsend and the U.S. Patent Application No. 111,226 to Kukreja disclose magnetic floppy disk read/write head carriages which are shifted by means of a stepper motor and a coaxially connected "lead screw". The lead screw operates, upon rotation, to move the carriage, and the magnetic head(s) arranged thereon, in a direction radial to the center-driven floppy disk. By controlling the increments of rotation of the stepper motor, the magnetic head(s) may be aligned to effect data transfer with selected tracks on the disk.

While this type of mechanism for shifting and positioning the magnetic read/write head carriage of a floppy disk drive is reasonably accurate, it consumes considerable space within the floppy disk drive unit and is relatively expensive. Therefore, whereas a stepper motor and lead screw are normally employed in commercial floppy disk drives for 8 inch floppy disks, another type of shifting and positioning mechanism has found wide acceptance in industry for the smaller, less expensive drive units normally associated with small business computers and "personal" computers. These drive units, which accept a 5 1/4 inch "diskette", frequently utilize a "band drive" positioning mechanism of the type disclosed in the U.S. Patent No. 4,161,004 to Dalziel and the U.S. Patent No. 4,170,146 to Owens. This type of positioning mechanism converts the rotary motion of the stepper motor into the linear motion of the read/write head carriage by driving a cylindrical capstan with the stepper motor and interconnecting the capstan and the carriage with a flexible, non-stretchable band. The band is wound around the capstan and fixed thereto with its opposite end portions extending from the capstan along a line which is tangent to the capstan and parallel to the path of movement of the carriage. The opposite ends of the band are attached to the carriage in such a way as to maintain proper tension in the band.

Both the Danziel and Owens patents disclose means for attaching one end of the band to the carriage in a rigid manner and attaching the opposite end in a resilient manner so as to bias the two ends of the band apart and to maintain proper, continuous tension in the band. Such attachment means, which provide resilient biasing, have been provided with the known band drive positioning mechanisms to compensate for the different thermal expansion characteristics of the materials used for the band, the capstan and the carriage. In particular, the resilient biasing means were required in the prior art because the tension in the band would otherwise increase or decrease with variations in temperature.

## SUMMARY OF THE INVENTION

It is a principal object of the present invention to provide an improved positioning mechanism for the read/write head carriage of a floppy disk drive which employs the so-called "band drive" principle.

It is a more particular object of the present invention to provide a band drive positioning mechanism for the read/write head carriage of a floppy disk drive in which the resilient biasing means for attaching one end of the band to the carriage may be eliminated.

These objects, as well as further objects which will become apparent from the discussion that follows, are achieved, according to the present invention, by rigidly attaching the respective opposite ends of the band to the carriage and selecting the dimensions and materials of the positioning mechanism such that the system is thermally compensated.

It has been discovered, in particular, that the positioning mechanism may be thermally compensated by selecting the dimensions and materials of the carriage, band and capstan in such a way that a change in length of the carriage between the points of attachment of the band plus the change in circumference of the capstan at the pitch diameter is substantially equal to the change in length of the band due to changes in temperature.

For a full understanding of the present invention, reference should now be made to the following detailed description of the preferred embodiment of the invention and to the accompanying drawings.

## BRIEF DESCRIPTION OF THE DRAWINGS

Fig. 1 is a top view of a read/write head carriage and a carriage positioning mechanism according to a preferred embodiment of the present invention.

Fig. 2 is a cross sectional view of the read/write head carriage and the positioning mechanism shown in Fig. 1, taken along the line 2-2 in Fig. 1.

Fig. 3 is a vector diagram illustrating the principle of thermal compensation employed in the present invention.

Fig. 4 is a plan view of a flexible, non-stretchable band utilized in the positioning mechanism of Fig. 1.

## DESCRIPTION OF THE PREFERRED EMBODIMENT

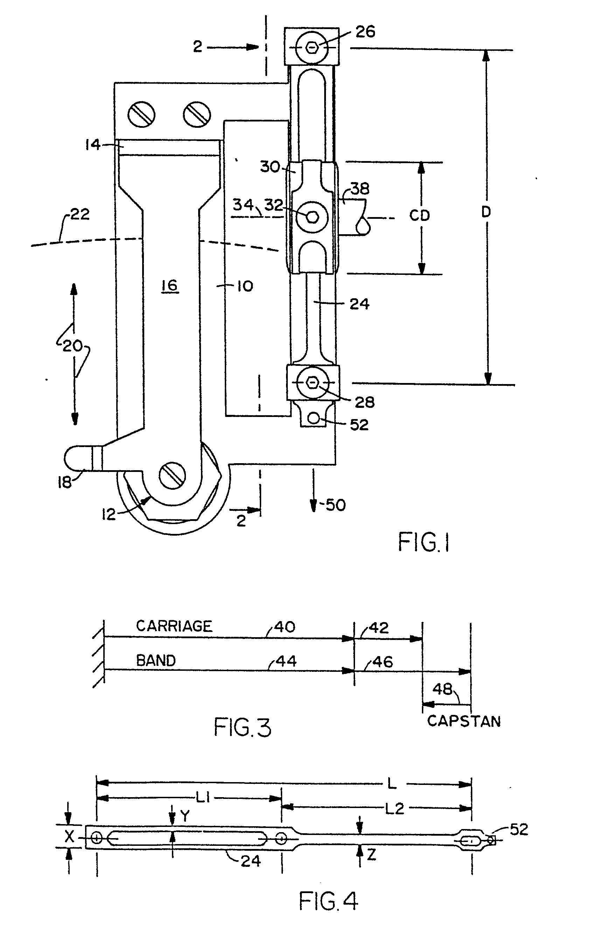

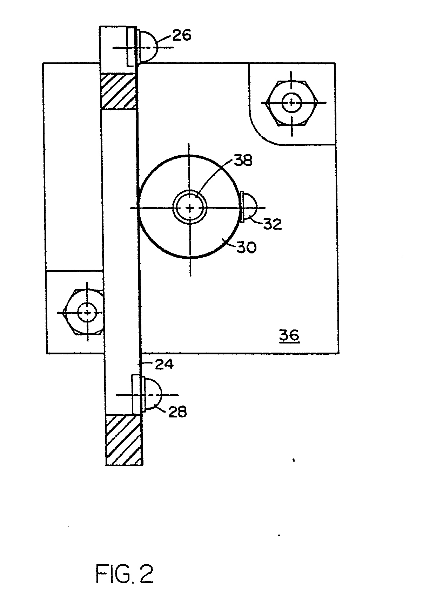

The preferred embodiment. of the present invention will now be described with reference to Figs. 1-4 of the drawing. Identical elements in the various figures are designated with the same reference numerals.

Figs. 1 and 2 show a read/write head carriage and a carriage shifting and positioning mechanism for a floppy disk drive unit. The carriage 10 provides a support at one end for a magnetic read/write head 12. At its other end, the carriage 10 supports a hinge 14 on which is mounted a head loading arm 16. At the point directly above the read/write head 12, the head loading arm carries either a small felt pad or a second or "upper" read/write head. If the head loading arm 16 supports a pad, its function is solely to bias a rotating floppy disk or diskette against the head 12 during recording and playback. If an upper head is provided on the loading arm 16, information can be recorded on and read from both sides of the floppy disk or diskette.

The head loading arm 16 is biased in a direction toward the read/write head 12 on the carriage 10 by means of a suitable spring (not shown). The head loading arm is provided with a lifting lever 18 to facilitate actuation of the arm by a solenoid so that the arm may be automatically lifted away from the read/write head 12 against the spring biasing force.

The carriage 10, with its associated read/write head 12 and head loading arm 16, is arranged on rails (not shown) to permit back and forth linear movement in the directions indicated by the arrows 20. In this way, the lower read/write head 12 and the upper read/write head (if any) on the head loading arm 16 are shifted radially with respect to the floppy disk or diskette, the edge of which is indicated by the dashed line 22. In this way, the read/write head(s) supported on the carriage 10 are moved into alignment with a selected one of a plurality of tracks on the diskette.

The movement of the carriage 10 in the linear direction 20 is effected by a shifting and positioning mechanism shown on the right hand side of Fig. 1 and in Fig. 2. This mechanism comprises a flexible, non-stretchable band 24 rigidly attached at its opposite ends to the carriage 10 by means of screws 26 and 28. Intermediate between its two ends the band is wound around a capstan 30 and rigidly affixed thereto by another screw 32. The capstan 30, which is cylindrical in shape, is arranged in such a way that its axis 34 is perpendicular to the path of movement of the carriage 10. With this arrangement of the axis 34, the end portions of the band 24 extending outward from the capstan 30 extend along a line which is tangent to the capstan and parallel to the path of movement of the carriage 10.

The carriage 10 is shifted into selected positions to align the read/write head(s) with tracks on the floppy

-10-

disk or diskette 22 by means of a stepper motor 36 which is connected to the capstan 30 by means of a coaxial shaft 38. Rotation of the capstan to any particular angular position is converted into linear movement of the carriage 10 by the band 24.

From the foregoing description, it will be understood that the ability of the positioning mechanism to accurately position the carriage 10 and, in turn, a read/write head 12 on a track of the disk 22 depends upon the cumulative tolerances of the stepper motor and motor bearings, the capstan 30 and the band 24. The total permissable tolerance in positioning the carriage 10 is in the order of about .001 inches. This tolerance follows from the fact that, with the current industry standard of 96 tracks per inch on a floppy disk or diskette, successive tracks are 1/96 or .01042 inches apart. Each track is .00625 ±10% inches wide leaving a distance between tracks in the order of .00417. These distances must be correspondingly reduced when recording with higher track densities as are proposed for future floppy disk drive units.

In order to accurately position the read/write head 12 on the carriage 10 at a selected track, various parameters of the positioning mechanism must be maintained within prescribed tolerances. One of these parameters is the tension of the band 24. Should this tension be too low, it will permit a certain degree of "play" in the carriage movement in the directions of the arrows

20 for a given angular position of the capstan 30; if this tension is too great, it will stretch the band 24 and/or its clamping points beyond their elastic limits.

In order to maintain a constant tension in the band, known positioning mechanisms of the band drive type are provided with a means for attaching one end of the band to the carriage in such a way as to apply a biasing force. The U.S. Patent No. 4,161,004 to Dalziel discloses two different types of resilient attachment means for applying this biasing force. The U.S. Patent No. 4,170,146 to Owens discloses another type of resilient attachment means.

According to the present invention, both ends of the band 24 are rigidly attached to the carriage - i.e., by the screws 26 and 28, respectively - and both the materials and the dimensions of the positioning mechanism are selected in such a way that the band tension remains substantially constant even though the ambient temperature may vary over a range of 40°C. The present invention is therefore based on the discovery that it is, in fact, possible to provide temperature compensation in a positioning mechanism of this type and the invention provides a formula by which temperature compensation may be achieved.

The theory by which the positioning mechanism according to the invention may be temperature compensated is illustrated in Fig. 3. In this diagram, the distance on the carriage 10 between the points of attachment of the band 24 at an initial low temperature - say, at 4°C - is indicated by the vector 40. When this temperature increases by 40° to 44°C, the distance between the points of attachment on the carriage 10 is increased by an increment indicated by a second vector 42.

Immediately below the vector 40 is a parallel vector 44 showing the linear distance along the carriage of the band 24 between the points of attachment, also at the initial low temperature of 4°C. When this temperature increases by 40° to 44°C, the band, which expands along its total length (including the length wound around the capstan 30  increases in length by the amount indicated by the vector 46. Although the points of attachment of the band 24 and the carriage 10 expand at different rates as the temperature increases, this difference may be more or less exactly balanced by selecting the proper material and dimensions of the capstan 30. As the capstan expands, it therefore compensates for the excess expansion in the band 24 as indicated by the vector 48 in Fig. 3.

The expansion properties illustrated in Fig. 3 can be expressed in a formula. In this formula, the material of the carriage 10 is designated as M1, the material of the capstan 30 as M2 and the material of the band 24 as M3. The critical dimensions of the positioning mechanism are shown in Figs. 1 and 4. These are:

D = distance on carriage 10 between the points of attachment of the band 24;

CD = the capstan diameter;

CC = $\pi$CD = the capstan circumference.

L = the length of the band between its points of attachment.

According to the invention, the materials M1, M2 and M3 and the three dimensions CC, D and L are selected, such that upon a change in the temperature within the expected temperature range of operation of the floppy disk drive unit (4° - 44°C) the temperature-dependent changes in the dimensions CC and D, when added together, are substantially equal to the temperature-dependent change in the dimension L. In other words, as may be seen in the vector diagram of Fig. 3, the lengths of the vectors 42 and 48, when added together, are substantially equal to the length of the vector 46.

It should be noted that, for the types of materials (both metal and plastic) normally utilized for a carriage, capstan and flexible band, the linear expansion is substantially linearly dependent upon temperature for the temperature range in question. For increased accuracy, the actual pitch circumference PC of the capstan and band may be used in the formula instead of the capstan circumference CC. The pitch circumference is the circular distance around the capstan taken along the center of the band. That is, PC equals $\pi$(PD) where PD is the pitch diameter. PD equals CD + T, where T is the thickness of the band.

-14-

Thus:

$$PC = \pi(CC/\pi + T).$$

In a preferred embodiment of the positioning mechanism according to the present invention, the following materials and dimensions were selected for the carriage, capstan and band.

Carriage: The material M1 is polycarbonate with 40% glass and 15% teflon fill. The coefficient of thermal expansion for this material is $13.0 \times 10^{-6}$ inches/inches/F°. The distance D between the centers of the mounting holes for the screws 26 and 28 is 2.05882 inches.

Capstan: The material M2 of the capstan is a stainless steel alloy; namely, 17-4PH. The coefficient of thermal expansion of this material is $6.0 \times 10^{-6}$ inches/inches F°. The capstan diameter CD = 0.6612 + .0001 and -.0002.

Band: The material M3 of the band is a stainless steel alloy; namely, alloy 304. The coefficient of thermal expansion of this material is $9.6 \times 10^{-6}$ inches/inches/F°. The length L of the band between the centers of the screw holes at its opposite ends is 4.14216 inches. The thickness T of the band is 0.0020 inches.

The various other dimensions of the band shown in Fig. 4 are listed below:

-15-

$$L1 = 1.99931$$
$$L2 = 2.14285$$
$$X = 0.240$$
$$Y = 0.050$$
$$Z = 0.080$$

Given the above noted materials with their coefficients of thermal expansion and given the above noted dimensions it is possible to confirm the compensation for thermal expansion by calculating the respective expansions of the carriage, band and capstan using the formula:

$$\Delta°F \text{ X coefficient of thermal expansion X base distance subject to expansion}$$

For the carriage, thermal expansion in the distance D due to a typical increase in temperature of 40°F would be:

$$40 \text{ X } 13.0 \text{ X } 10^{-6} \text{ X } 2.05882 = 0.00107$$

For the band, the length expansion $\Delta L$ would be:

$$40 \text{ X } 9.6 \text{ X } 10^{-6} \text{ X } 4.14216 = 0.00159.$$

For the capstan, the increase in the pitch diameter PD for this temperature increase would be:

$$40 \text{ X } 6.0 \text{ X } 10^{-6} \text{ X } 0.6632 = 0.000155$$

The increase in the pitch circumference PC is therefore:

$$\Delta PC = \pi \Delta PD$$
$$\Delta PC = \pi 0.000155 = .00049$$

Plugging the above numbers into the formula according to the invention, it may be seen that:

$$\Delta D + \Delta PC \simeq \Delta L$$
$$0.00107 + .00049 = 0.00156$$
$$\simeq 0.00159$$

Since the band drive positioning mechanism according to the present invention is compensated for thermal expansion, the two ends of the band 24 may be rigidly attached by means of the screws 26 and 28. During manufacture, one end of the band is initially attached by tightening the screw 26. The band is then wound around and affixed to the capstan 30 by the screw 32 and pulled with a prescribed tension in the direction indicated by the arrow 50 with a scale hooked into a hole 52 (Fig. 1). With the tension applied, the band is finally fixed in position by tightening the screw 28.

There has thus been shown and described a novel positioning mechanism for a floppy disk drive read/write head carriage which fulfills all the objects and advantages south therefor. Many changes, modifications, variations and other uses and applications of the subject invention will, however, become apparent to those skilled in the art after considering this specification and the accompanying drawing which discloses the preferred embodiment thereof. All such changes, modifications, variations and other uses and applications which do not depart from the spirit and scope of the invention are deemed to be covered by the invention which is to be limited only by the claims which follow.

WHAT IS CLAIMED IS:

1.    A positioning mechanism for a read/write head carriage of a recording/playback machine of the type utilizing a recording disk upon which information is magnetically stored, said positioning mechanism comprising, in combination:

    (a)  a carriage adapted to carry a read/write head, said carriage being made of a first material M1 and arranged for movement along a linear path within the machine to position the read/write head with respect to the recording disk;

    (b)  a cylindrical capstan having a central axis and a prescribed circumference CC, said capstan being made of a second material M2, being arranged for rotation about said central axis, and being disposed adjacent said carriage with said central axis perpendicular to said path of movement of said carriage;

    (c)  a flexible, non-stretchable band having opposite ends, said band being made of a third material M3 and being wound around said capstan and affixed thereto with its opposite end portions extending from said capstan substantially along a line which is tangent to said capstan and parallel to said path of movement of said carriage;

(d) means for rigidly attaching the respective, opposite ends of said band to said carriage, thereby defining a linear carriage distance D and a total band length L between the points of attachment;

said first, said second and said third material M1, M2, M3 and said three dimensions CC, D and L being selected such that, upon a change in the temperature within the expected temperature range of operation of the machine, the temperature-dependent changes in the dimensions CC and D, when added together, are substantially equal to the temperature-dependent change in the dimension L.

2. The positioning mechanism defined in claim 2, wherein the temperature-dependent changes in the dimensions D and PC, when added together, are substantially equal to the temperature-dependent change in the dimension L,

where PC is the pitch circumference and is equal to $\pi (CC/\pi + T)$, where T is the thickness of the band.

3. The positioning mechanism defined in either one of claims 1 or 2, wherein said recording/playback machine is a floppy disk drive.

FIG.1

FIG.3

FIG.4

FIG. 2

0085970

2/2